# EUROPEAN PATENT SPECIFICATION

(11) **EP 2 286 986 B1**
(45) Date of publication and mention of the grant of the patent: **20.03.2013**
(21) Application number: 10008138.9
(22) Date of filing: 04.08.2010
(51) Int. Cl.: B29D 30/28, B29C 65/00

(54) **Pressure roller assembly and tire manufacturing method using the same**
Druckrollenanordnung und Reifenherstellungsverfahren damit
Ensemble formant rouleau de pression et procédé de fabrication de pneus l'utilisant

(30) Priority: 10.08.2009 JP 2009185988
(43) Date of publication of application: 23.02.2011
(73) Proprietor: Sumitomo Rubber Industries, Ltd., Hyogo-ken (JP)
(72) Inventor: Nakamura, Akihiro, Kobe-shi Hyogo 651-0072 (JP)
(74) Representative: Manitz, Finsterwald & Partner GbR

(56) References cited:
- GB-A- 2 033 315
- JP-A- 2008 087 375
- JP-A- 2008 155 418
- US-A- 2 455 038
- US-A- 4 052 246
- US-A- 4 341 584
- US-A- 5 330 609
- US-A1- 2006 254 695

## Description

### Technical Field

The present invention relates to a pressure roller assembly and a tire manufacturing method using the same, more particularly to a pressure roller whose pressing surface is adaptable to various uneven surfaces of objects to be pressed.

### Background Art

when manufacturing a pneumatic tire, various raw rubber strips are wound around a drum and overlapped.

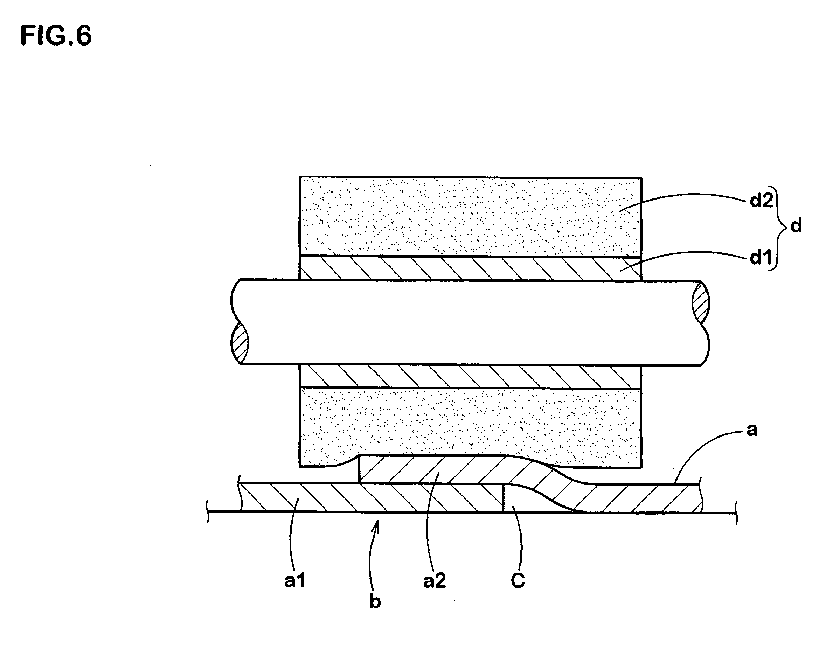

For example, in the case of a conventional inner-liner, a relatively wide rubber strip is wound around a drum into a cylindrical form, and the circumferential end portions thereof are overlap jointed. In order to remove the air trapped between the end portions a1 and a2 and in the vicinity (c) of such an overlapped portion (b), as shown in Fig.6, a pressure roller (d) is pressed against and rolled along the overlapped portion (b). A pressure roller for such purpose is discloses in the Japanese Patent Application Publication No.P2003-145642A, wherein the pressure roller has an outer layer d2 made of a sponge material and an inner layer d1 made of a rubber-like elastic material. When unevenness of the surface of the object to be pressed is large, it is difficult for such pressure roller (d) to press the surface according to the unevenness. As a result, there is a possibility that the trapped air is remained. If the trapped air is too much, the incidence of defective tires increases.

A pressure roller assembly having the features of the preamble of claim 1 is known from JP 2008-155418 A.

Further pressure roller assemblies are disclosed in JP 2008-087375 A, GB 2 033 315 A, US 2,455,038 A, US 2006/254695 A and US 5,330,609 A.

### Summary of Invention

It is an object of the present invention to provide a pressure roller assembly which has a pressing surface adaptable to various uneven surfaces of the objects and can remove the trapped air effectively even when the unevenness is large.

Another object of the present invention is to provide a method for manufacturing a pneumatic tire, in which the pressure roller assembly is used to remove the air trapped in the overlapped portion and its vicinity and thus, the incidence of defective tires can be improved.

The objects are achieved with a pressure roller assembly having the features of claim 1 and a method of manufacturing a pneumatic tire having the features of claim 5, respectively. Claim 6 is directed to a pressure roller device including an inventive pressure roller assembly. Subclaims are directed to preferable embodiments.

### Brief Description of Drawings

Fig.1 is a cross sectional view of a pressure roller assembly according to the present invention.
Fig.2 is an exploded perspective view of the pressure roller assembly.
Fig.3 shows a behavior of the segmented roller of the pressure roller assembly.
Fig.4 shows another example of the segmented roller together with a behavior thereof.
Fig.5 is a schematic perspective view of a tire building apparatus including the pressure roller assembly.
Fig.6 shows a behavior of a prior-art pressure roller.

### Description of Embodiments

Embodiments of present invention will now be described in detail in conjunction with accompanying drawings.

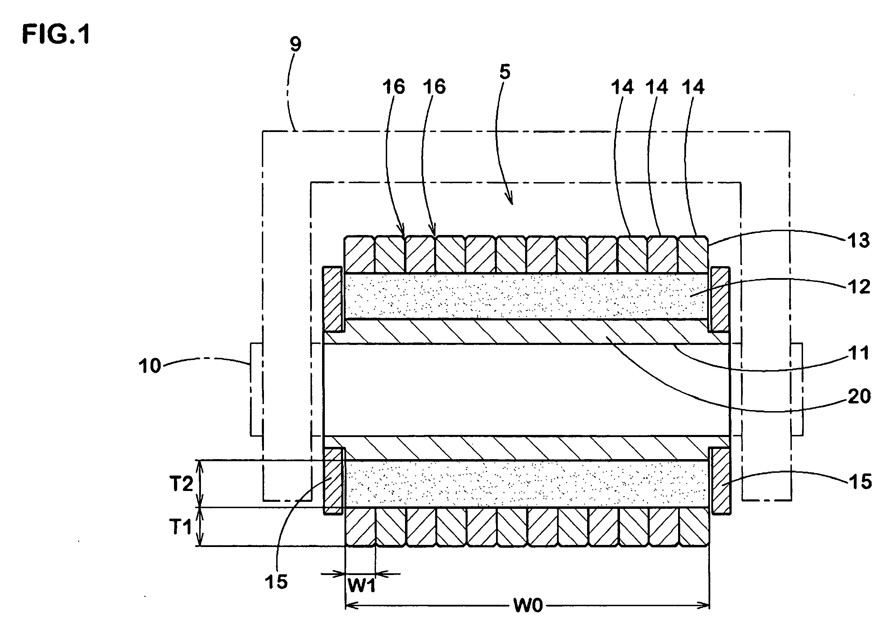

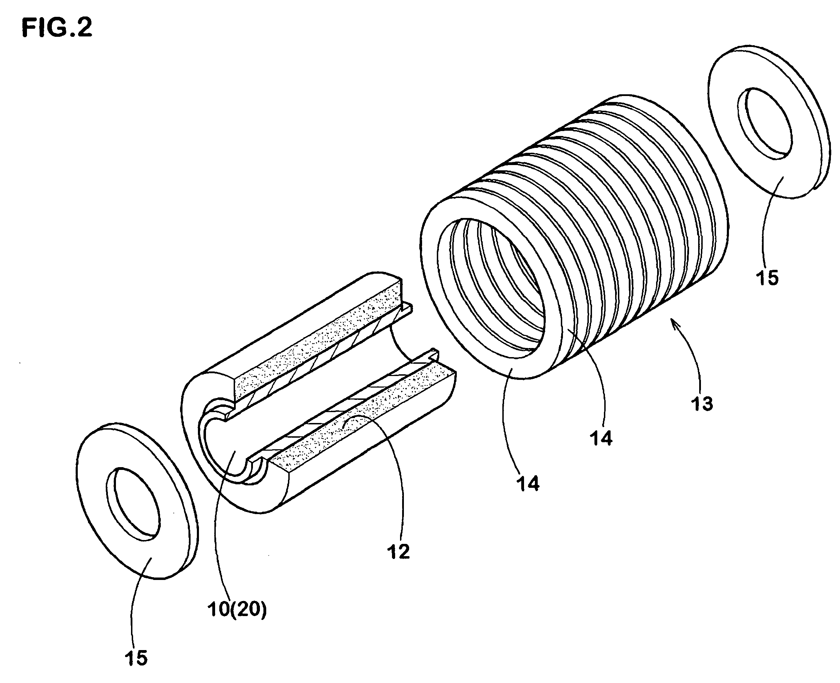

As shown in Figs.1, 2 and 3, a pressure roller assembly 5 according to the present invention comprises: a support shaft 11; a tubular elastic support 12 fitted on the support shaft 11; and a segmented roller 13 fitted on the tubular elastic support 12 and having a pressing surface for pressing the objects.
The pressure roller assembly 5 is rotatably supported by a roller holder 9.

The support shaft 11 has a main portion 20 having a constant diameter and an axial width substantially same as the axial width W0 of the above-mentioned pressing surface.

The support shaft 11 in this example is a tubular body having a through center hole of which inner circumferential surface is formed from a low-friction bearing material. A shaft 10 penetrates the through center hole, and both ends of the shaft 10 are fixedly supported between two opposite plates of the roller holder 9, thereby the support shaft 11 is rotatably supported by the roller holder 9.
Aside from such liquid bearing, it is also possible to use various bearings, e.g. ball bearing, disposed between the tubular support shaft 11 and the shaft 10.
Further, as another example of the support shaft 11, the support shaft 11 without the center hole, namely, a solid shaft can be used. In this case, the support shaft 11 is provided on both sides of the main portion 20 with decreased-diameter portions to be rotatably supported by the two opposite plates of the roller holder 9 through bearings provided therebetween.

The above-mentioned tubular elastic support 12 is a cylindrical body having an axial width substantially same as the axial width W0 of the pressing surface, and has rubber-like elasticity so as to cause elastic deformation when subjected to external force.
For the tubular elastic support 12, suitably used are elastic materials whose 100 % modulus is in a range of from 7 to 10. For example, natural rubber, chloroprene rubber, urethan rubber, silicon rubber and the like can be used. In view of the elasticity, mechanical strength, molding accuracy and the like, urethan rubber is preferred.
In this example, the tubular elastic support 12 is bonded to the main portion 20 so as to rotate together.

The segmented roller 13 is made up of a plurality of roller segments 14 divided in the axial direction of the roller. Each of the roller segments 14 is a thin hard circular body having a constant axial width W1 (shown in Fig.1).
The roller segments 14 are closely arranged between two discoidal side plates 15 fixedly attached to both ends of the main portion 20 of the support shaft 11. Therefore, relatively to the support shaft 11, the roller segments 14 are not allowed to move in the axial direction of the roller. Also, it is not allowed to incline to the axial direction. But, the roller segments 14 are allowed to move in the radial direction or perpendicular direction to the axial direction independently from each other, owing to elasticity deformation of the tubular elastic support 12.
For the roller segments 14, according to the invention, nylon resins are suitably used therefor because the friction between the roller segments 14 becomes very small.
The roller segments 14 have a radial thickness T1 (show in Fig.1) of not less than 3 mm.
Each of the roller segments 14 has an axial width W1 of not less than 1 mm, preferably not less than 1.5 mm, but not more than 5 mm, preferably not more than 4 mm.
If the width W1 is less than 1 mm, the respective roller segments are easily deformed and as a result, it becomes difficult for the roller segments to move smoothly. If the width W1 is more than 5 mm, it becomes difficult for the roller segments to move precisely according to the uneven surface of the object to be pressed. Thus, it becomes difficult to remove trapped air.

In the example of the segmented roller 13 shown in Figs. 1, 2 and 3, all of the roller segments 14 have the same widths W1.

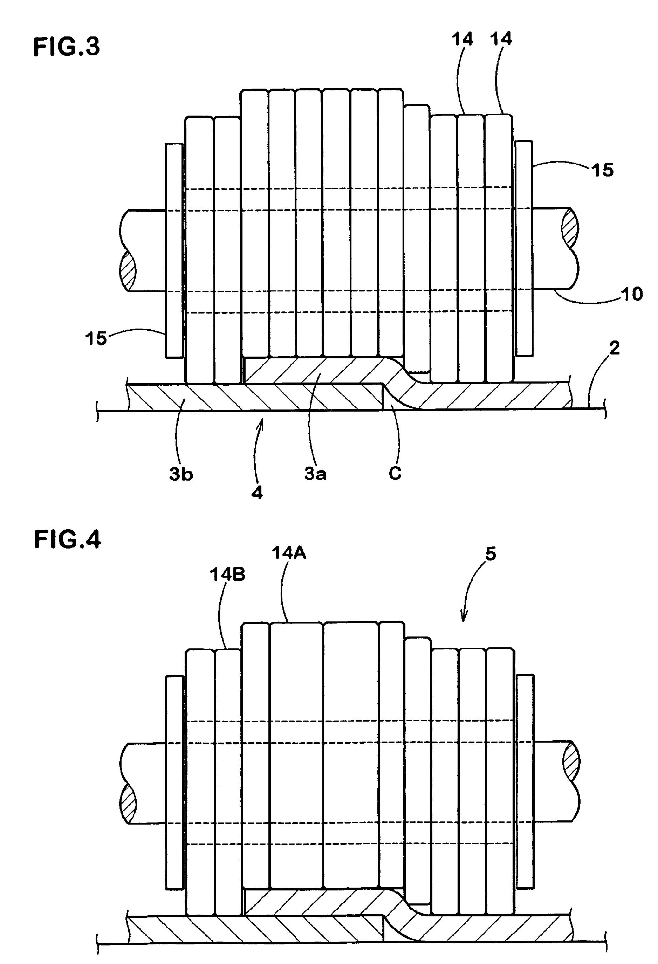

Fig.4 shows another example of the segmented roller 13, in which the roller segments 14 have two or more different axial widths W1. In this example, the roller segments 14 include roller segments 14A having a larger axial width, and roller segments 14B having a smaller axial width.
In this case, the narrow width roller segments 14B are arranged in an area of the overlapped portion where the thickness change in the axial direction is relatively large, and the wider width roller segments 14A are arranged in an area where the thickness change in the axial direction is relatively small.
As a result, a constant pressure across a wide range and a reduce in the number of the segments can be achieved.

In either case, according to the invention, both edges of each roller segment 14 are chamfered by a straight line or an arclike curved line when viewed in the cross section including the rotational axis. Thereby, each roller segment 14 can press an inclined part of the surface of the overlapped portion 4 smoothly without scraping the raw rubber from the overlapped portion 4.

Therefore, as shown in Figs. 3 and 4, when the pressure roller assembly 5 is pressed and rolled on uneven surfaces, the roller segments 14 are more or less moved radially towards the support shaft 11 according to the unevenness, while compressing the elastic support 12. As a result, trapped air in the overlapped portion 4 and its vicinity can be removed, and at the same time, the adhesion of the rubber strip in the overlapped portion 4 is furthered.

A method for manufacturing a pneumatic tire according to the present invention, comprises the steps of: making a raw tire; and vulcanizing the raw tire in a mold, wherein the making of the raw tire comprises,
winding a rubber strip 3 around a drum 2 so as to form an overlapped portion 4, and
pressing the overlapped portion 4 by the use of the pressure roller assembly 5 as shown in Fig.3 or 4.

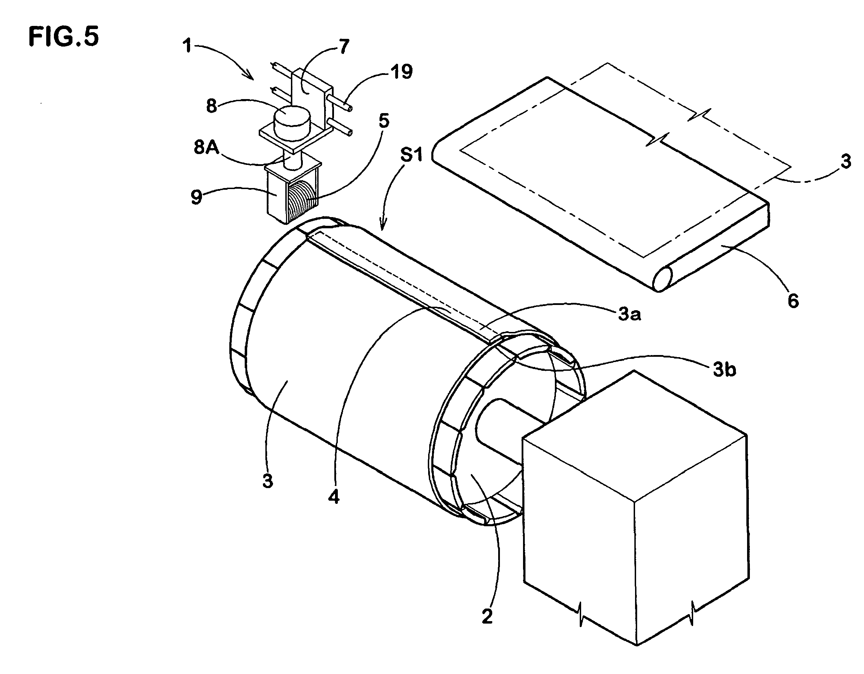

In the embodiment shown in Fig.5, the drum 2 is a tire building drum. The rubber strip 3 is an inner-liner rubber. The rubber strip 3 is wound almost once around the drum 2 into a cylindrical shape, and the circumferential end portions 3a and 3b of the rubber strip 3 are overlapped jointed.
The overlapped portion 4 in this embodiment is the overlap joint portion extending parallel with the rotational axis of the drum.

Aside from the inner-liner rubber, the rubber strip 3 may be a rubber chafer forming an outer surface of the bead portion contacting with a wheel rim, a bead reinforcing layer, a carcass ply, a tread reinforcing layer and the like. In other words, the rubber strip 3 may be a strip of unvulcanized rubber alone as well as a strip of unvulcanized rubber in which reinforcing cords are embedded.

Further, aside from the overlapped portion 4 extending parallel with the rotational axis of the drum, the pressure roller assembly 5 can be used to press an overlapped portion 4 extending obliquely with respect to the rotational axis of the drum, and an overlapped portion 4 extending along the circumferential direction of the drum. For example, the pressure roller assembly 5 can be used in such a case that the rubber strip 3 having a relatively narrow width is helically overlap-wound around the drum a large number of times.

In Fig.5, a pressure roller device 1 is incorporated in a tire building apparatus.

The tire building apparatus comprises: an expandable/contractable cylindrical tire building drum as the drum 2; a feeding device 6 for the rubber strip 3; and the pressure roller device 1.
As explained above, the rubber strip 3 fed by the feeding device 6 is wound around the drum 2 into a cylindrical form.
The circumferential end portions 3a and 3b of the rubber strip 3 are overlap jointed, forming the overlapped portion 4.
The pressure roller device 1 is used to closely overlap the end portions 3a and 3b and closely contact the overlapped portion 4 and the vicinity thereof with the drum 2 so that trapped air is completely eliminated.

The pressure roller device 1 comprises:
the pressure roller assembly 5;
a traverser 7 traversing the drum 2 in parallel with the rotational axis of the drum; and
a pressing device 8 supported by the traverser 7 and pressing the pressure roller assembly 5 towards the drum.
   In this example, the rotational axis of the pressure roller assembly 5 is perpendicular to the rotational axis of the drum. When the drum is not rotated, the pressing device 8 presses the pressure roller assembly 5 onto the overlapped portion 4 (overlap joint) of the rubber strip 3 (inner-liner rubber), and at the same time, the traverser 7 is traversed so that the segmented roller 13 can roll on and press the overlapped portion 4 and certain ranges on both sides thereof by one stroke.

For that purpose, the axial width W0 of the segmented roller 13 is set in a range of not less than 15 mm, preferably not less than 30 mm, but not more than 100 mm, preferably not more than 80 mm.
If the width W0 is less then 15 mm, it is difficult to press the overlapped portion 4 and certain ranges on both sides thereof by one stroke. The width W0 of more than 100 mm is superfluous. The radial thickness T2 (shown in Fig.1) of the tubular elastic support 12 is set in a range of from 10 to 15 mm.
The pressure roller assembly 5 according to the present invention is not limited to such axial width W0 range and radial thickness T2 range. A suitable range for the width W0 of the segmented roller 13 and a suitable range for the thickness T2 of the tubular elastic support 12 vary depending on the conditions of the object to be pressed.

The pressing device 8 in this example is an air cylinder fixed to the traverser 7 with its rod 8A toward the drum, and at the end of the rod 8A, the pressure roller assembly 5 is attached by the above-mentioned u-shaped roller holder 9 so that the above-mentioned shaft 10 is held perpendicularly to the axial direction the drum. Aside from the air cylinder, a combination of a spring and a mechanical actuator and the like can be used instead.

The traverser 7 in this example is a carriage axially movably supported and guided by shafts 19 extending in the axial direction of the drum.
For example, it is possible to utilize, as the traverser 7, a transfer device for transferring a cylindrical raw tire case (including the rubber strip 3) built up on the drum 2 from the drum 2 to a shaping drum for shaping the cylindrical raw tire case into a toroidal form.

It is to be understood that the invention is not limited in its application to the details of construction and arrangement of parts illustrated in the accompanying drawings, since the invention is capable of other embodiments and of being practiced or carried out in various ways. Also it is to be understood that the phraseology or terminology employed herein is for the purpose of description and not of limitation.

### Comparison Tests

in order to confirm the effectiveness of the invention, by using pressure rollers having the structure shown in Fig.1 and specifications shown in Table 1, pneumatic tires (size 215/45R17) were manufactured and checked for trapped air to obtain the incidence of defective tires due to trapped air. More specifically, an inner-liner rubber was wound around a forming drum into a cylindrical shape, and the circumferential ends thereof were overlap jointed. The pressure roller was used to press the overlap joint portion and remove the trapped air. The width and thickness of the inner-liner rubber were 420 mm and 1.5 mm, respectively. The rolling speed and pressure of the pressure roller were 100 mm/sec and 0.25 MPa, respectively.
The diameter of the pressure roller was 50 mm.

After the tire was vulcanized, the inner surface of the tire was visually checked, and the number of defective tires having the inner surface irregularly deformed by the trapped air was counted. The results are as follows.

**Table 1**

| Pressure roller | Ref.1 | Ref.2 | Ref.3 | Ex.1 | Ex.2 |
|---|---|---|---|---|---|
| Width W0 (mm) | 60 | 60 | 60 | 10 | 20 |
| segmented ? | no | no | no | yes | yes |
| Number of segments | --- | --- | --- | 2 | 4 |
| Width W1 (mm) | --- | --- | --- | 5 | 5 |
| Material | urethan | nylon | steel(S45C) | nylon | nylon |
| Tubular elastic support | --- | --- | --- | urethan | urethan |
| Incidence of defective tires (per ten thousand) | 5 | 4 | 6 | 8 | 6 |
| | | | | | |

| Pressure roller | Ex.3 | Ex.4 | Ex.5 | Ex.6 | Ex.7 |
|---|---|---|---|---|---|
| Width W0 (mm) | 40 | 60 | 80 | 100 | 60 |
| segmented ? | yes | yes | yes | yes | yes |
| Number of Segments | 8 | 12 | 16 | 20 | 40 |
| Width W1 (mm) | 5 | 5 | 5 | 5 | 1.5 |
| Material | nylon | nylon | nylon | nylon | nylon |
| Tubular elastic support | urethan | urethan | urethan | urethan | urethan |
| Incidence of defective tires (per ten thousand) | 4 | 0 | 0 | 0 | 1 |

As apparent from the comparison of the test results of Refs.1, 2 and 3 and Exs.4 and 7 having the same pressure roller width W0 of 60 mm, the pressure roller according to the present invention can effectively remove the trapped air in the overlapped portion, and thereby the incidence of defective tires can be remarkably decreased.

## Claims

1. A pressure roller assembly comprising
a support shaft (11),
a tubular elastic support (12) fitted on the support shaft (11), and
a segmented roller (13) fitted on the tubular elastic support (12) and having a pressing surface for pressing an object, the segmented roller (13) divided axially of the roller into a plurality of roller segments (14) which are movable radially of the roller independently from each other by elasticity deformation of the tubular elastic support (12)
**characterized in that**
the roller segments (14) are made of a nylon resin and both edges of each roller segment (14) are chamfered by a straight line of an arc-like curved line when viewed in the cross section including the rotational axis.

2. The pressure roller assembly according to claim 1, wherein the segmented roller (13) has an axial width of from 15 to 100 mm, and the roller segments (14) each have an axial width of from 1 to 5 mm.

3. The pressure roller assembly according to claim 2, wherein the roller segments (14) have at least two different axial widths (W1).

4. The pressure roller assembly according to claim 1, 2 or 3, wherein the tubular elastic support (12) is made of urethan rubber.

5. A method for manufacturing a pneumatic tire using the pressure roller assembly (5) as set forth in claim 1 and comprising the steps of:
forming a raw rubber component of the tire by winding a rubber strip (3) around a drum (2) so as to form an overlapped portion (4) of the rubber strip, and
pressing the overlapped portion (4) by the pressure roller assembly (5) to secure adhesion of the rubber strip and removal of trapped air.

6. A pressure roller device including the pressure roller assembly (5) as set forth in claim 1 and comprising
a roller holder (9) rotatably supporting the pressure roller assembly,
a pressing device (8) to which the roller holder is attached, for moving the roller holder (9) towards an object,
a traverser (7) for moving the pressing device along a portion of the object to be pressed.

## Patentansprüche

1. Druckwalzenanordnung, umfassend
eine Trägerwelle (11),
einen rohrförmigen elastischen Träger (12), der an der Trägerwelle (11) befestigt ist, und
eine segmentierte Walze (13), die an dem rohrförmigen elastischen Träger (12) befestigt ist und eine Druckfläche aufweist, um Druck auf ein Objekt auszuüben, wobei die segmentierte Walze (13) axial bezüglich der Walze in eine Vielzahl von Walzenelementen (14) unterteilt ist, die radial bezüglich der Walze unabhängig voneinander durch elastische Verformung des rohrförmigen elastischen Trägers (12) bewegbar sind,
**dadurch gekennzeichnet, dass**
die Walzensegmente (14) aus Nylonharz hergestellt sind und beide Ränder jedes Walzensegments (14) bei Betrachtung in dem die Drehachse enthaltenden Querschnitt durch eine gerade Linie oder eine bogenartig gekrümmte Linie angefast sind.

2. Druckwalzenanordnung nach Anspruch 1, wobei die segmentierte Walze (13) eine axiale Breite von 15 bis 100 mm aufweist, und die Walzensegmente (14) jeweils eine axiale Breite von 1-5 mm aufweisen.

3. Druckwalzenanordnung nach Anspruch 2, wobei die Walzensegmente (14) zumindest zwei unterschiedliche axiale Breiten (W1) aufweisen.

4. Druckwalzenanordnung nach Anspruch 1, 2 oder 3, wobei der rohrförmige elastische Träger (12) aus Urethankautschuk hergestellt ist.

5. Verfahren zum Herstellen eines Luftreifens unter Verwendung der Druckwalzenanordnung (5) nach Anspruch 1 und mit den Schritten:
Bilden einer Rohkautschukkomponente des Reifens durch Wickeln eines Kautschukstreifens (3) um eine Trommel (2), um einen überlappten Abschnitt (4) des Kautschukstreifens zu bilden, und
Ausüben von Druck auf den überlappten Abschnitt (4) durch die Druckwalzenanordnung (5), um die Anhaftung des Kautschukstreifens und die Beseitigung eingeschlossener Luft sicherzustellen.

6. Druckwalzenvorrichtung, die eine Druckwalzenanordnung (5) nach Anspruch 1 umfasst, und mit
einem Walzenhalter (9), der die Druckwalzenanordnung drehbar lagert,
einer Druckvorrichtung (8), an der der Walzenhalter angebracht ist, um den Walzenhalter (9) in Richtung eines Objekts zu bewegen,
eine Traversiervorrichtung (7) zum Bewegen der Druckvorrichtung entlang eines Abschnitts des Objekts, auf das Druck auszuüben ist.

## Revendications

1. Ensemble formant rouleau de pression, comprenant un arbre de support (11),
un support élastique tubulaire (12) monté sur l'arbre de support (11), et un rouleau segmenté (13) monté sur le support élastique tubulaire (12) et ayant une surface de pressage pour presser un objet, le rouleau segmenté (13) étant divisé axialement par rapport au rouleau en une pluralité de segments de rouleau (14) qui sont déplaçables radialement par rapport au rouleau indépendamment les uns des autres par déformation élastique du support élastique tubulaire (12) **caractérisé en ce que**
les segments de rouleau (14) sont réalisés en résine de type nylon et les deux bords de chaque segment de rouleau (14) sont chanfreinés par une ligne droite ou par une ligne courbe semblable un arc lorsqu'on observe dans une section transversale qui inclut l'axe de rotation.

2. Ensemble formant rouleau de pression selon la revendication 1,
dans lequel le rouleau segmenté (13) a une largeur axiale de 15 à 100 mm, et les segments de rouleau (14) ont chacun une largeur axiale de 1 à 5 mm.

3. Ensemble formant rouleau de pression selon la revendication 2,
dans lequel les segments de rouleau (14) ont au moins deux largeurs axiales différentes (W1).

4. Ensemble formant rouleau de pression selon la revendication 1, 2 ou 3, dans lequel le support élastique tubulaire (12) est réalisé en caoutchouc uréthane.

5. Procédé pour fabriquer un bandage pneumatique utilisant l'ensemble formant rouleau de pression (5) selon la revendication 1, et comprenant les étapes consistant à :
former un composant en caoutchouc brut du pneumatique en enroulant un ruban de caoutchouc (3) autour d'un tambour (2) de manière à former une portion en chevauchement (4) du ruban en caoutchouc, et
presser la portion en chevauchement (4) par l'ensemble formant rouleau de pression (5) pour assurer l'adhésion du ruban en caoutchouc et l'évacuation de l'air emprisonné.

6. Dispositif à rouleau de pression incluant l'ensemble formant rouleau de pression (5) selon la revendication 1, et comprenant un porte-rouleau (9) qui supporte en rotation l'ensemble formant rouleau de pression,
un dispositif de pressage (8) sur lequel est attaché le porte-rouleau, pour déplacer le porte-rouleau (9) vers un objet,
un moyen de déplacement transversal (7) pour déplacer le dispositif de pressage le long d'une portion de l'objet à presser.
